# EUROPÄISCHE PATENTSCHRIFT

(11) **EP 3 749 616 B1**
(45) Veröffentlichungstag und Bekanntmachung des Hinweises auf die Patenterteilung: **17.01.2024**
(21) Anmeldenummer: 20712314.2
(22) Anmeldetag: 17.03.2020
(51) Int. Cl.: C02F 1/463, C02F 3/00, C02F 1/461, H01M 8/16, C02F 101/16, C02F 101/12, C02F 1/46, C02F 1/66

(54) **VERFAHREN ZUR ABWASSERBEHANDLUNG**
METHOD FOR TREATING WASTEWATER
PROCÉDÉ POUR LE TRAITEMENT DES EAUX USÉES

(30) Priorität: 04.04.2019 DE 102019108832
(43) Veröffentlichungstag der Anmeldung: 16.12.2020
(73) Patentinhaber: SWR New Energy GmbH, 5300 Hallwang (AT)
(72) Erfinder: TRASCH, Heinz, 67065 Ludwigshafen (DE); DORSCH,Manfred, 74740 Adelsheim (DE)
(74) Vertreter: Behr, Wolfgang
(86) Internationale Anmeldenummer: PCT/EP2020/057271
(87) Internationale Veröffentlichungsnummer: WO 2020/200764

(56) Entgegenhaltungen:
- DE-B3-102010 050 692
- US-A- 3 635 764
- US-A- 6 083 377
- US-A1- 2013 112 601
- US-A1- 2014 322 629

## Beschreibung

Die Erfindung betrifft ein Verfahren zur Behandlung industrieller oder kommunaler Abwässer.

Im Stand der Technik sind unterschiedliche Verfahren zur anaeroben Abwasserbehandlung bekannt, wobei organische Verunreinigungen mittels anaeroben Mikroorganismen in Biogas umgewandelt werden. Soweit die Abwässer nitrathaltig sind erfolgt typischerweise eine Denitrifikation durch anaerobe Mikroorganismen, wobei die Nitrate in elementaren Stickstoff oder in Ammoniak umgewandelt werden.

Im Stand der Technik ebenfalls bekannt ist der Einsatz von Magnesium-Anoden von Magnesium-Primärzellen als Opferanoden in z.B. Notfallsystemen oder Beleuchtungseinrichtungen, die mit Meerwasser als Elektrolyt betrieben werden. An der Anode läuft die Oxidation des Magnesiums ab (1). An der Kathode wird der im Elektrolyten gelöste Sauerstoff reduziert (2). Die Kathode und der Elektrolyt werden dabei typischerweise mit Luft begast, um die Zelle mit genügend gelöstem Sauerstoff zu versorgen.

Anode: 2 Mg → 2 Mg²⁺ + 4 e⁻ (1)

Kathode: O₂ + 2 H₂O + 4 e⁻ → 4 OH- (2)

An der Anode bildet sich feinverteiltes, hochoberflächiges und polares Magnesium-hydroxid welches als Fällungsmittel für im Abwasser enthaltene gelöste und ungelöste Schadstoffe wirken kann, indem es diese adsorbiert und im Anschluss durch nachfolgende Verfahren wie Sedimentation, Zentrifugation, Flotation, Filtration oder dergleichen abgetrennt werden können.

Unter bestimmten Bedingungen kann die Magnesium-Primärzelle gleichzeitig wie ein galvanisches Element arbeiten und chemische Energie in nutzbare elektrische Energie umwandeln. In diesem Zusammenhang ist beispielsweise auf das Patent DE 10 2010 050 692 B3 (dort Absatz [0013]) zu verweisen, wo diese Doppelfunktion im Zusammenhang mit der elektrochemischen MAP-Fällung von Phosphaten aus Abwässern offenbart ist. Auch die US 2013/112601 A1 betrifft den galvanischen Betrieb gattungsgemäßer Zellen.

Aus der US 6,083,377 A ist ein Verfahren zur elektrolytischen Denitrifizierung von Wasser und dabei insbesondere eine pH-abhängige Regelung des Potentials der Zelle bekannt.

Aufgabe der Erfindung ist es, ein unter bestimmten Aspekten verbessertes Verfahren zur Behandlung industrieller oder kommunaler Abwässer, vorzugsweise anaerober industrieller oder kommunaler Abwässer bereitzustellen.

Vor diesem Hintergrund betrifft die Erfindung ein Verfahren zur Behandlung industrieller oder kommunaler Abwässer, welche Nitrat aufweisen, wobei das Verfahren den Schritt der Reduktion der Nitrate durch Kontaktierung anaerober Abwässer mit einer Magnesium-Primärzelle aufweist, wobei die Nitrate als Oxidationsmittel an der Kathode der Magnesium-Primärzelle dienen.

Die anaeroben Abwässer weisen bei Kontaktierung mit der Magnesium-Primärzelle eine Sauerstoffsättigung von kleiner 10 % und weiter vorzugsweise kleiner 5 % auf. Die Sauerstoffkonzentrationen bei einer bestimmten Sauerstoffsättigung hängen von der Wassertemperatur ab. So liegt eine 100%ige Sauerstoffsättigung von Süßwasser bei Normaldruck und 0°C bei einer Sauerstoffkonzentration von 14,6 mg/l vor, bei 10°C sind es 11,3 mg/l und bei 20°C sind es 9,1 mg/l. Die im Rahmen der vorliegenden Erfindung als "anaerob" zu verstehenden Zustände mit niedrigen Sättigungen werden oft als hypoxisch bezeichnet. Geringe Mengen an Sauerstoff, die beispielsweise durch Gasdiffusion in ein Reaktorgefäß gelangt, beeinflussen die Reduktion der Nitrate nur wenig. Größere Sauerstoffanteile im Abwasser behindern hingegen die Reduktion der Nitrate und führen zu Nebenreaktionen. Eine etwaige Gewinnung elektrischer Energie wird durch Sauerstoffanteile nicht negativ beeinflusst. Liegt eine Sauerstoffsättigung von nahe 0 % vor, spricht man von Anoxie.

Die anaerobe Abwasserreinigung dient grundsätzlich der Entfernung schädlicher oder störender organischer Kohlenstoffverbindungen durch mikrobiologische Abbauprozesse, die ohne Vorhandensein von Sauerstoff (anaerob) ablaufen. Dabei gewinnen Bakterien die für ihren Stoffwechsel erforderliche Energie aus der Umsetzung der organischen Kohlenstoffverbindungen zu organischen Säuren und in weiterer Folge hauptsächlich zu Methan, Kohlendioxid, Kohlenwasserstoff. Die anaerobe Abwasserreinigung ist ein möglicher Teilprozess in Kläranlagen. Neben der fast flächendeckend eingesetzten anaeroben Behandlung in Faultürmen sind anaerobe Verfahrensführungen auch in anderem Zusammenhang bekannt.

Die Magnesium-Primärzelle fungiert im Rahmen des erfindungsgemäßen Verfahrens als Redox-System, das in Abwesenheit von Sauerstoff im Abwasser vorhandene oxidierende Stoffe, nämlich die Nitrate reduziert.

Anhand des Verfahrens werden also nitrathaltige Abwässer gereinigt, wobei es sich bei dem Schritt der Reduktion der Nitrate um eine Denitrifikation handelt. Nitrat wird im Rahmen eines erfindungsgemäßen Verfahrens an der Kathode in einem kaskadenförmigen Verlauf (3) zu einem Endprodukt reduziert, das je nach Verfahrensführung (pH, Kathodenmaterial, Katalysator, Verweildauer, etc.) molekularer Stickstoff, Ammoniak oder Ammonium sein kann.

NO₃⁻ → NO₂⁻ → NO → N₂ (→ NH₄⁺ / NH₃) (3)

Perchlorate haben eine niedrige toxikologisch relevante Konzentration, deshalb sind schon geringste Mengen an Perchlorat im Trinkwasser Besorgnis erregend. Die Europäische Behörde für Lebensmittelsicherheit (EFSA) leitet deshalb eine tägliche tolerierbare Aufnahmemenge von 0,3 µg Perchlorat/kg Körpergewicht ab. Der Nachweis von Chloraten in kommunalen Abwässern könnte gemäß neueren Untersuchungen mit der Wasseraufbereitung durch verschiedene Chlorierungsmittel in Zusammenhang stehen. Im Juni 2015 hat die EFSA eine maximale Aufnahmemenge von 0,003 mg Chlorat/kg Körpergewicht empfohlen.

Gemäß der Erfindung ist vorgesehen, dass die Magnesium-Primärzelle galvanisch betrieben wird und die gewonnene elektrische Energie an einen Speicher oder Verbraucher bereitgestellt wird. Bei der galvanischen Fahrweise wird elektrische Energie geliefert. Die Magnesium-Primärzelle arbeitet wie ein galvanisches Element und wandelt chemische Energie in elektrische Energie um. Sie erfüllt also in gewisser Weise eine Doppelfunktion mit doppeltem Nutzen, nämlich Abwasserreinigung und Energiegewinnung. Bemerkenswert ist, dass die Energiegewinnung im Kontext des vorliegenden Verfahrens ohne den Einsatz von Sauerstoff als Oxidationsmittel erfolgt. Über die Stromabnahme kann in einem gewissen Bereich auch die Stromdichte und somit die Freisetzung der Magnesium-Ionen beeinflusse werden.

Weiter ist erfindungsgemäß vorgesehen, dass das Verfahren einen der Reduktion der Nitrate nachgelagerten Schritt der Schwebstoffabtrennung aufweist, ausgewählt aus der Gruppe der Sedimentation, Zentrifugation, Flotation und Filtration. Im Rahmen des vorliegenden Verfahrens kann die bipolare Eigenschaft des als Nebenprodukt in der Magnesium-Primärbatterie entstehenden Magnesiumhydroxids ausgenützt werden, um neben einer Reduktion der Nitrate auch andere Verunreinigungen wie beispielsweise Schwermetall-Ionen zu entfernen, wobei das Magnesiumhydroxid als Fällungsmittel dient.

Generell ist im Kontext der vorliegenden Erfindung hervorzuheben, dass aufgrund des entstehenden Magnesium-Hydroxids in vielen Fällen eine bedeutende Verbesserung in der erzielbaren Wasserreinheit gegenüber bekannten Methoden erreicht werden kann. So stellt es beispielsweise bereits in Form der typischerweise von Magnesium-Hydroxid in Lösung gebildeten und ausgefallenen, hochmolekularen Hydrat-komplexen ein wirksames Fällungshilfsmittel für gelöste Farbstoffe oder gelöste Arzneimittel bzw. Arzneimittelmetabolite aber auch für sich nicht in Lösung befindliche Fremdstoffe dar, welche die Komplexe aufgrund ihrer Polarität adsorptiv binden und somit durch nachfolgende Behandlung einfach aus der wässrigen Lösung entfernen können.

An der Anode entsteht das Magnesium-Hydroxid aber zunächst monomolekular und geht in diesem Fall aufgrund seiner anfänglich monomolekularen polaren Struktur in sehr frühem Stadium ebenfalls adsorptive Wechselwirkungen zu den genannten und gelösten Fremdstoffen in wässrigen Lösungen ein. Das Massenverhältnis ist in diesem Fall deutlich günstiger und effizienter im Entfernen von Fremdstoffen, als dies bei Hydrat-Komplexen der Fall ist.

Insbesondere vor dem Hintergrund immer weiter steigender Konzentrationen von Arzneimitteln im Abwasser (derzeit werden die höchsten Konzentrationen für Diclofenac und Carbamazepin gemessen) ist dieser Umstand von großer Bedeutung und ermöglicht es, in einer Ausführungsvariante der Erfindung ohne eine Reinigung des Wassers mit Aktivkohle auszukommen.

In einer Ausführungsform ist vorgesehen, dass die anaeroben Abwässer bei Kontaktierung mit der Magnesium-Primärzelle einen Feststoffanteil von kleiner als 10 Gew.-% aufweisen. Die Positionierung der Magnesium-Primärzelle innerhalb des Gesamtverfahrens kann an verschiedenen Stellen der Anlage erfolgen. Vorzugsweise sollte sie dort platziert sein, wo sich wenige Schwebstoffe im Abwasser befinden, da das als Elektrolyt dienende Abwasser eine möglichst störungsfreie Ionenleitfähigkeit haben sollte. Beispielsweise kann die Magnesium-Primärzelle in einem Klärbecken oder Nachklärbecken, etwa in der mechanischen oder der biologischen oder in beiden Reinigungsstufen positioniert werden. Die Positionierung der Magnesium-Primärzelle im System der Abwasserreinigung hat keinen prohibitiven Einfluss auf z.B. die Denitrifikation, da die Nitrate gelöst im Elektrolyt vorliegen.

In einer Ausführungsvariante kann die Magnesium-Primärzelle in einer mechanischen Abtrennung, beispielsweise einem Käfig aus beispielsweise engmaschigen Gittern platziert werden, um Schwebstoffe von der Magnesium-Primärzelle fernzuhalten. So kann ein vorteilhaft niedriger Schwebstoffanteil auch bei Platzierung der Magnesium-Primärzelle an anderen Stellen des Gesamtverfahrens, beispielsweise in einem Faulturm oder in einem Belebungsbecken erreicht werden.

Gemäß der Erfindung ist vorgesehen, dass der pH-Wert der anaeroben Abwässer bei Kontaktierung mit der Magnesium-Primärzelle größer 10 ist. Gegebenenfalls kann vorgesehen sein, dass der pH-Wert vor der Denitrifikation auf diesen Wert eingestellt wird. Der pH-Wert zeigt einen großen Einfluss auf die Effizienz des Verfahrens, insbesondere mit Blick auf die Gewinnung elektrischen Stroms. Dies ist bedingt durch die Löslichkeit des gebildeten Magnesiumhydroxids. Je höher der pH-Wert, desto mehr Magnesiumhydroxid fällt aufgrund seines Löslichkeitsprodukts aus und wird der Lösung entzogen. Als optimal können unter diesem Gesichtspunkt pH-Werte von etwa 10-11 angesehen werden, was erfindungsgemäß vorgesehen ist.

Geeignete Elektrolyttemperaturen können bei etwa 10-30°C liegen. Die Temperaturen spielen bei der Funktion der Magnesium-Primärbatterie eine eher untergeordnete Rolle. In Experimenten konnte dennoch eine gewisse Abhängigkeit der Effizienz mit Blick auf die Gewinnung elektrischer Energie nachgewiesen werden, was vermutlich durch kinetische Effekte bedingt ist. Temperaturen von größer 20°C können daher in einer Ausführungsvariante bevorzugt sein.

Die Kathode der Magnesium-Primärzelle ist typischerweise aus einem inerten leitfähigen Material wie beispielsweise aus einem korrosionsbeständigen Metall mit höherem Standardpotential als zumindest Magnesium, aus Graphitkohlenstoff oder aus einem leitfähigen Kunststoff gefertigt. Die Kathode kann porös oder feinstrukturiert aufgebaut sein, beispielsweise als Fasergeflecht, oder sie hat einen partikulären Aufbau, beispielsweise als Verbund granulierten Materials.

In einer Ausführungsform ist vorgesehen, dass die Kathode ein leitfähiges Trägermaterial umfasst, an dem ein Katalysator assoziiert ist. Beispielsweise kann ein Katalysator als Suspension auf das Kathodenträgermaterial aufgesprüht werden. Die Sprühdispersion kann ein katalytisch wirkendes Material (etwa Mangandioxid) und gegebenenfalls ein Polymer (etwa Polytetrafluoräthylen) und/oder ein Adsorber (etwa Aktivkohle) aufweisen. Oftmals können auch Edelmetall-Ionen, z.B. Kupfer- oder Silber-Ionen zugesetzt sein.

Die Anode der Magnesium-Primärzelle ist erfindungsgemäß aus Magnesium oder einer Magnesium-Legierung gefertigt. Beispielsweise haben sich Magnesium-Legierungen mit geringen Anteilen von kleiner als 5 Gew.-% an Aluminium und/oder Zink, etwa Magnesium AZ31 (3% Aluminium, 1% Zink) als besonders geeignet erwiesen,

In einer Ausführungsform ist vorgesehen, dass die anaeroben Abwässer kontinuierlich an der Magnesium-Primärzelle vorbeigeführt werden. Alternativ können die anaeroben Abwässer auch im Batch-Betrieb mit der Magnesium-Primärzelle kontaktiert werden. Die Frage, ob die Magnesium-Primärzelle kontinuierlich durchströmt oder im Batch-Betrieb kontaktiert wird, hängt wesentlich von der Positionierung innerhalb des Gesamtverfahrens und von der Art des Gesamtverfahrens ab. Die Behältnisse für die anaerobe Abwasserbehandlung sind typischerweise als geschlossene Systeme ausgelegt. Beispiele umfassen Faultürme oder Flachbecken. Die Abwässer können entweder kontinuierlich durchströmt oder im diskontinuierlichen Betrieb gerührt werden.

Produkte des Verfahrens sind je nach Ausführungsvariante elektrischer Strom, Wasserstoff, Ammoniak oder Chlorgas sein. Wasserstoff kann zur Energiegewinnung oder in unterschiedlichen chemischen Prozessen weiterverwendet werden. Ammoniak entsteht gemäß der Erfindung und wird gemäß der Erfindung im Rahmen einer Rückkopplung wiederum zur pH-Wert-Einstellungen des Abwassers vor Kontaktierung mit der Magnesium-Primärzelle verwendet. Chlorgas kann zur Desinfektion beispielsweise in der Trinkwasseraufbereitung benutzt werden.

Weitere Einzelheiten und Vorteile der Erfindung ergeben sich aus dem nachfolgend anhand der Figuren erklärten Ausführungsbeispiel. In den Figuren zeigen:
- Figur 1:: eine schematische Darstellung eines typischen Ablaufs der Abwasserreinigung in einer Kläranlage (nicht erfindungsgemäß); und
- Figur 2:: eine schematische Darstellung eines Reaktors mit einer Magnesium-Primärzelle zur Verwendung im Rahmen eines erfindungsgemäßen Verfahrens.

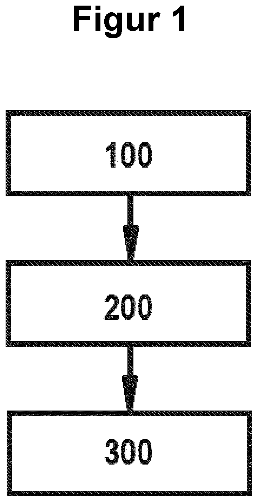

Figur 1 zeigt in schematischer Weise den typischen Aufbau einer Kläranlage. In einem ersten Schritt 100 wir das Abwasser mechanisch gereinigt, beispielsweise durch einen Rechen, einen Sandfang, eine primäre Sedimentationsstufe oder Kombinationen daraus. In dieser Stufe wird ein erheblicher Anteil der festen Schwimm- und Schwebstoffe entfernt. In einem zweiten Schritt 300 wird das Abwasser biologisch durch Mikroorganismen behandelt, um biologisch abbaubare organische Abwasserbestandteile zu mineralisieren. Diese Vorgänge können aerob oder anaerob erfolgen. Oftmals werden sowohl aerobe als auch anaerobe biologische Reinigungsschritte eingesetzt. In einem weiteren Schritt 300 kommt es zu einer abiotisch-chemischen Reinigung, um Stoffe wie Schwermetalle oder Phosphor durch Fällung, Adsorption oder dergleichen Verfahren ohne Beteiligung von Mikroorganismen aus dem Abwasser zu entfernen. Dabei werden üblicherweise Aluminium- oder eisensalze als Fällungs- bzw. Flockungsmittel eingesetzt, die, wenn sie in den Trinkwasserzyklus eingebracht werden, gesundheitsschädliche Eigenschaften haben können. In der vorliegenden Anmeldung können die bisher eingesetzten Reagenzien durch Magnesiumhydroxid ersetzt werden, das ähnliche polare Eigenschaften als Fällungsreagens besitzt.

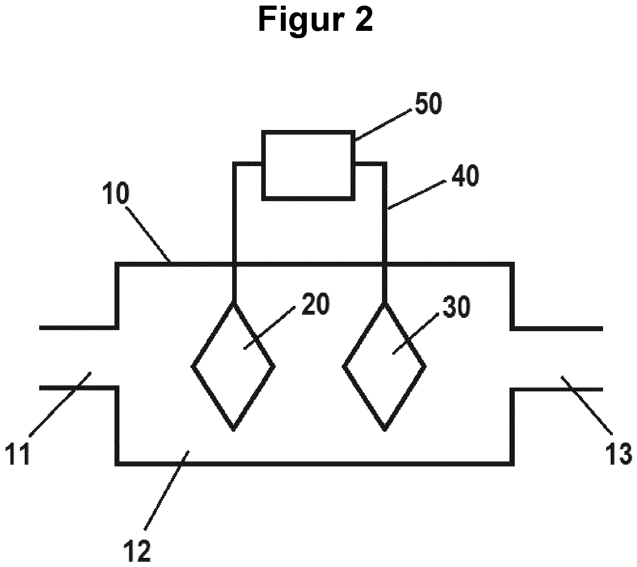

Figur 2 zeigt einen Reaktor mit einer Magnesium-Primärzelle. Dieser Reaktor kann in einer Kläranlage überall dort zur Durchführung eines erfindungsgemäßen Verfahrens eingesetzt werden, wo anaerobe Bedingungen herrschen. Er umfasst ein Reaktorgehäuse 10 mit einer Reaktorkammer 12 sowie mit einem Einlass 11 und einem Auslass 13. Das Reaktorgehäuse 10 ist so ausgebildet, dass der Eintrag von Luftsauerstoff in das Abwasser gering gehalten oder ganz vermieden werden kann. In der Reaktorkammer 12 sind eine Kathode 30 umfassend ein Kathodenträgermaterial, beispielsweise Kynol^{®}, das mit einer Katalysatordispersion umfassend Mangandioxid und Aktivkohle imprägniert ist, oder andere Kathoden, sowie eine Anode 20 aus einer Magnesium-Legierung, beispielsweise Magnesium AZ31, angeordnet. Die Kathode 20 und die Anode 30 sind anhand eines Leiters 40 verbunden, wobei in dieser Verbindung 40 zwischen Kathode 20 und Anode 30 ein Verbraucher 50 angeordnet ist, der entstehende elektrische Energie abgreifen und nützen kann.

Im Rahmen eines erfindungsgemäßen Verfahrens ist vorgesehen, dass sauerstoffarmes bzw. sauerstofffreies und nitrathaltiges Abwasser kontinuierlich durch den Einlass 11, die Reaktorkammer 12 und den Auslass 13 strömt und dabei als Elektrolyt für die Magnesium-Primärzelle dient, die durch aus Kathode 20, die Anode 30 und den Leiter 40 gebildet wird.

Durch das Schließen des Stromkreises aufgrund Kontaktierung mit dem Abwasser kommt es an der Anode 30 zu einer Oxidation des unedlen Magnesiums:

Mg → Mg²⁺ + 2 e⁻ (4)

Zudem bildet sich an der Anode 30 feinverteiltes, hochoberflächiges und polares Magnesiumhydroxid, welches als Fällungsmittel für im Abwasser enthaltene Schadstoffe wirkt, indem es die Schadstoffe adsorbiert und durch nachfolgende Verfahren wie Sedimentation, Zentrifugation, Flotation, Filtration oder dergleichen abgetrennt werden kann.

An der Kathode 20 findet, aufgrund der geringen oder fehlenden Verfügbarkeit von molekularem Sauerstoff im sauerstoffarmen bzw. sauerstofffreien Abwasser zu einer Reduktion des Nitrats

NO₃⁻ → NO₂⁻ → NO → N₂ (→ NH₄⁺ / NH₃) (3)

Die freiwerdende elektrische Energie wird am Leiter 40 durch den Verbraucher 50 genützt bzw. gespeichert. So arbeitet die Magnesium-Primärzelle im Rahmen eines erfindungsgemäßen Verfahrens auch als galvanisches Element und wandelt chemische Energie in nutzbare elektrische Energie um. Sie erfüllt mithin eine Doppelfunktion.

Der in Figur 2 gezeigte Reaktor wird zur Durchführung eines erfindungsgemäßen Verfahrens vorzugsweise an einer Stelle des Klärprozesses eingesetzt, in der das Abwasser einen verhältnismäßig geringen Feststoffanteil aufweist. Es ist aber auch ein Einsatz an Positionen mit hohem Feststoffanteil, beispielsweise in einem Faulturm denkbar, wenn Vorkehrungen getroffen werden, um Feststoffe von den Elektroden fernzuhalten. Beispielhaft ist in diesem Zusammenhang die Anordnung eines Käfigs um die Magnesium-Primärzelle zu nennen.

Besonders vorteilhaft ist, wenn der in Figur 2 gezeigte Reaktor an einer Stelle des Klärprozesses eingesetzt wird, in dem der pH-Wert des Abwassers basisch ist. Erfindungsgemäß werden unter diesem Gesichtspunkt pH-Werte von etwa 10-11 angesehen. Gegebenenfalls wird der pH-Wert stromaufwärts des Reaktoreinlasses 11 durch Rückkopplung von Ammoniak-Gas auf diesen Wert eingestellt, welches im Rahmen der Nitrat-Reduktion in der Magnesium-Primärzelle entsteht.

Ein nachfolgend dargestellter Laborversuch belegt günstige Eigenschaften des kontinuierlich an der Anode entstehenden naszierenden Magnesium-Hydroxids.

Für den folgenden Versuch wurde eine Mg/Luft-Zelle verwendet, die aus eine Mg-Anode (8 % Al, 3% Zn, Mn, Si, Pb) und zwei Kathoden enthielt, die im Abstand von 3 cm rechts und links der Anode angeordnet waren. Die Kathoden bestanden aus einem Edelstahlrahmen, der mit leitfähigem Kohlenstofffaserfilz der Fa. Kynol bespannt war. Die Kathoden wurden während des Versuchs kontinuierlich mit Luft begast. Das Volumen der Zelle betrug 1,4 L. Über einen Überlauf war diese Zelle mit einem Absatzbecken, das ein Volumen von 3 L aufwies verbunden. Zu Beginn des Versuchs war die Apparatur mit destilliertem Wasser gefüllt, das NaCl als Leitsalz enthielt (0,5 Gew-%).

Über eine Pumpe wurde ein konstanter Volumenstrom (180 ml/h) einer farbstoffhaltigen Lösung der Mg/Luft-Zelle zugeführt. Die Zulauflösung enthielt den roten, sehr intensiven und gut wasserlöslichen Azo-Farbstoff Poncean 4R, auch bekannt als E124 bzw. Cochinellerot A in einer Konzentration von 19,4 mg/L. Kathode und Anode wurden über einen 1 Ohm Widerstand miteinander verbunden, um die Zelle konstant zu entladen und dabei fein verteiltes Mg-Hydroxid zu erzeugen. Über den Überlauf gelang kontinuierlich Mg-Hydroxid und farbstoffhaltige Lösung in das Absetzbecken. Dort sedimentierte der Niederschlag, der nun rot bzw. dunkelrot gefärbt war. Die wässrige Phase war farblos.

Im Zulauf zur Mg_Luft/Zelle und im Auslauf des Absetzbeckens wurden Proben entnommen und mithilfe eines UV-VIS-Spektrometers der Fa. Aquamate untersucht. In der folgenden Tabelle 1 sind die Extinktionswerte im Zu- und Ablauf bei einer Wellenlänge von 508 nm gegenübergestellt.

| **Probe** | **Extinktion 508 nm** |
|---|---|
| Vorrat Tag 0 | 0,241 |
| Zelle Tag 0 | 0,001 |
| Absetzbecken Tag 0 | 0,001 |
| Zelle Tag 1 | 0,000 |
| Absetzbecken Tag 1 | 0,000 |
| Absetzbecken Tag 2-1 | 0,000 |
| Absetzbecken Tag 2-2 | 0,001 |
| Absetzbecken Tag 3-1 | 0,001 |
| Absetzbecken Tag 3-2 | 0,002 |
| Absetzbecken Tag 7 | 0,000 |

## Patentansprüche

1. Verfahren zur Behandlung industrieller oder kommunaler Abwässer, welche Nitrat aufweisen, wobei das Verfahren den Schritt der Reduktion des Nitrats durch Kontaktierung von Abwässern mit einer Magnesium-Primärzelle aufweist, wobei die Kathode der Magnesium-Primärzelle aus Graphitkohlenstoff und die Anode der Magnesium-Primärzelle aus Magnesium oder einer Magnesium-Legierung gefertigt ist, und wobei das Nitrat als Oxidationsmittel an der Kathode (20) der Magnesium-Primärzelle dienen,
**dadurch gekennzeichnet,**
**dass** es sich bei den mit der Magnesium-Primärzelle kontaktierten Abwässern um anaerobe Abwässer handelt, die bei Kontaktierung mit der Magnesium-Primärzelle eine Sauerstoffsättigung von kleiner 10 % aufweisen,
**dass** die Magnesium-Primärzelle galvanisch betrieben wird und die gewonnene elektrische Energie an einen Speicher oder Verbraucher (50) bereitgestellt wird,
**dass** der pH-Wert der anaeroben Abwässer bei Kontaktierung mit der Magnesium-Primärzelle zwischen 10-11 ist und dieser pH-Wert durch Rücckopplung von Ammoniak-Gas auf diesen Wert eingestellt wird, welches im Rahmen der Reduktion des Nitrats in der Magnesium-Primärzelle entsteht, und
**dass** das Verfahren einen der Reduktion des Nitrats nachgelagerten Schritt der Schwebstoffabtrennung aufweist, ausgewählt aus der Gruppe der Sedimentation, Zentrifugation, Flotation und Filtration.

2. Verfahren nach Anspruch 1, **dadurch gekennzeichnet, dass** die anaeroben Abwässer bei Kontaktierung mit der Magnesium-Primärzelle eine Sauerstoffsättigung von kleiner 5 % aufweisen.

3. Verfahren nach einem der vorhergehenden Ansprüche, **dadurch gekennzeichnet, dass** die anaeroben Abwässer bei Kontaktierung mit der Magnesium-Primärzelle einen Feststoffanteil von kleiner 10 Gew.-% aufweisen.

4. Verfahren nach einem der vorhergehenden Ansprüche, **dadurch gekennzeichnet, dass** die anaeroben Abwässer kontinuierlich an der Magnesium-Primärzelle vorbeigeführt werden.

5. Verfahren nach einem der Ansprüche 1-3, **dadurch gekennzeichnet, dass** die anaeroben Abwässer mit Batch-Betrieb mit der Magnesium-Primärzelle kontaktiert werden.

## Claims

1. A method for the treatment of industrial or municipal wastewater containing nitrate, the method comprising the step of reducing the nitrate by contacting wastewaters with a magnesium primary cell, wherein the cathode of the magnesium primary cell is made of graphite carbon and the anode of the magnesium primary cell is made of magnesium or a magnesium alloy, and wherein the nitrate serves as an oxidizing agent at the cathode (20) of the magnesium primary cell,
**characterized in that**
the wastewater is anaerobic wastewater that has an oxygen saturation of less than 10 % when contacted with the magnesium primary cell,
the magnesium primary cell is operated galvanically and the electrical energy obtained is supplied to a storage device or consumer (50),
the pH value of the anaerobic wastewater when contacted with the magnesium primary cell is between 10-11 and this pH value is adjusted by adding gaseous ammonia, which is produced during the reduction of nitrate in the magnesium primary cell, and
the method comprises separating suspended matter downstream of the reduction of nitrate, by a process selected from the group consisting of sedimentation, centrifugation, flotation and filtration.

2. The method according to claim 1, **characterized in that** the anaerobic wastewater has an oxygen saturation of less than 5 % when contacted with the magnesium primary cell.

3. The method according to one of the preceding claims, **characterized in that** the anaerobic wastewater has a solids content of less than 10% by weight when contacted with the magnesium primary cell.

4. The method according to one of the preceding claims, **characterized in that** the anaerobic wastewater is continuously flowed through the magnesium primary cell.

5. The method according to any one of claims 1-3, **characterized in that** the anaerobic wastewater is contacted with the magnesium primary cell in batch mode.

## Revendications

1. Procédé de traitement d'eaux usées industrielles ou municipales contenant des nitrates, le procédé comprenant l'étape de réduction des nitrates par mise en contact des eaux usées avec une cellule primaire au magnésium, dans lequel la cathode de la cellule primaire au magnésium est faite de carbone graphitique et l'anode de la cellule primaire au magnésium est faite de magnésium ou d'un alliage de magnésium, et dans lequel le nitrate sert d'agent oxydant à la cathode (20) de la cellule primaire au magnésium,
**caractérisé en**
**ce que** les eaux usées anaérobies présentent une saturation en oxygène inférieure à 10 % lors de leur mise en contact avec la cellule primaire au magnésium,
que la cellule primaire au magnésium est exploitée de manière galvanique et que l'énergie électrique obtenue est mise à disposition d'un accumulateur ou d'un consommateur (50),
que le pH des eaux usées anaérobies est compris entre 10 et 11 lors de la mise en contact avec la cellule primaire au magnésium et que ce pH est ajusté à cette valeur par rétroaction de l'ammoniac gazeux qui se forme dans le cadre de la réduction du nitrate dans la cellule primaire au magnésium, et
ce que le procédé présente une étape de séparation des matières en suspension, choisie dans le groupe de la sédimentation, de la centrifugation, de la flottation et de la filtration, située en aval de la réduction du nitrate.

2. La procédé selon la revendication 1, **caractérisé en ce que** les eaux usées anaérobies présentent une saturation en oxygène inférieure à 5 % lors de leur mise en contact avec la cellule primaire au magnésium.

3. La procédé selon l'une des revendications précédentes, **caractérisé en ce que** les eaux usées anaérobies présentent une teneur en matières solides inférieure à 10 % en poids lors de leur mise en contact avec la cellule primaire au magnésium.

4. La procédé selon l'une des revendications précédentes, **caractérisé en ce que** les eaux usées anaérobies passent en continu devant la cellule primaire au magnésium.

5. La procédé selon l'une des revendications 1 à 3, **caractérisé en ce que** les eaux usées anaérobies sont mis en contact avec la cellule primaire au magnésium en mode batch.
